# EUROPEAN PATENT SPECIFICATION

(11) **EP 3 686 145 B1**
(45) Date of publication and mention of the grant of the patent: **29.04.2026**
(21) Application number: 19219507.1
(22) Date of filing: 23.12.2019
(51) Int. Cl.: B66B 5/00

(54) **REMOTELY MAINTAINING THE CONNECTION STATUS OF A CONNECTION PORT OF A PASSENGER CARRYING SYSTEM**
FERNWARTUNG DES VERBINDUNGSSTATUS EINES ANSCHLUSSPORTS EINES PASSAGIERBEFÖRDERUNGSSYSTEMS
MAINTENANCE À DISTANCE DE L'ÉTAT DE CONNEXION D'UN PORT DE CONNEXION D'UN SYSTÈME DE TRANSPORT DE PASSAGERS

(30) Priority: 28.01.2019 US 201916258934
(43) Date of publication of application: 29.07.2020
(73) Proprietor: Otis Elevator Company, Farmington, Connecticut 06032 (US)
(72) Inventor: WITCZAK, Tadeusz Pawel, Farmington, CT Connecticut 06032 (US)
(74) Representative: Dehns

(56) References cited:
- WO-A1-2012/154170
- WO-A1-2017/050785
- JP-A- 2016 052 933
- US-A- 5 064 026

## Description

### BACKGROUND

Modern passenger carrying systems, such as elevators and escalators, include sophisticated electronics. For example, many passenger carrying systems include the capability of reporting operational status information to facilitate remotely monitoring conditions and operation of the system. The control electrics also provide information to a technician onsite inspecting or servicing the system.

Some systems include a service tool communication port that is typically connected to a communication gateway to facilitate providing operational status information to a remotely located monitoring center. The same communication port may be used by a mechanic or technician who has an appropriate service tool. One problem that exists is that a mechanic or technician may disconnect the communication port from the gateway device while servicing or inspecting the system and then leave the communication port disconnected. After that individual departs from the site of the passenger carrying system, the disconnected communication port prevents remote monitoring of the system.

JP 2016 052933 A discloses a remote monitoring system for an elevator which include a monitoring device that is connected to a control device of the elevator so as to monitor operation of an elevator. A disconnection switch is provided for disconnecting the connection between the monitoring device and the control device. WO 2012/154170 A1 discloses a remote monitoring system for an elevator, which includes monitoring whether a service tool port is connected to a service tool.

### SUMMARY

A method of remotely maintaining a connection status of a service tool port of a passenger carrying system according to the claimed invention is recited in claim 1.

In an embodiment, the at least one criterion comprises at least one of the authorized individual being further than a threshold distance from the service tool port and an amount of time the service tool port has been disconnected from the communication gateway device exceeds a threshold time.

In an embodiment, the method further comprises determining whether the authorized individual is within the threshold distance comprises at least one of determining a location of the authorized individual by determining a position of a communication device associated with the authorized individual, and determining if a communication device associated with the authorized individual is detectable by another communication device near the service tool port.

In an embodiment, the communication device comprises a mobile station and providing the notice comprises sending a message to the mobile station indicating that the service tool port is not connected to the communication gateway device.

In an embodiment, the mobile station responds to the message by generating an alert that is at least one of audible, tactile and visual.

An embodiment includes determining whether the authorized individual has provided an acceptable response to the notice, determining whether a connection restoration time has passed since providing the notice to the authorized individual, and providing a second notice to at least the authorized individual indicating that the service tool port is not connected when the service tool port remains not connected, the authorized individual has not responded to the notice, and the restoration time has passed.

An embodiment includes determining the connection restoration time based on a distance between the service tool port and the authorized individual when the notice was provided, and wherein the acceptable response comprises at least one of an indication of a reason that the service tool port remains not connected or an indication that the authorized individual will connect the service tool port to the at least one authorized device at a later time.

An embodiment includes determining a service time between an arrival time when the authorized individual arrives at the location of the service tool port and a departure time when the authorized individual departs from the location of the service tool port, and determining an amount of time that the service tool port is connected to a service tool within the determined service time.

An embodiment includes determining whether the authorized individual connected and disconnected one or more devices and the service tool port during the determined service time.

There is also disclosed herein a monitoring device, not according to the claimed invention, that includes a processor and memory associated with the processor and is configured to determine whether a connection port of a passenger carrying system is connected to an authorized device, determine whether at least one criterion is satisfied while the connection port is not connected to an authorized device, and cause a notice to be provided to the authorized individual when the connection port is not connected to an authorized device and the at least one criterion is satisfied.

In an example of this monitoring device, the connection port is a service tool port and the detector detects whether the connection port is connected to an authorized device by detecting whether the service tool port is connected to at least one of a service tool or a communication gateway device.

In an example of this monitoring device, the at least one criterion comprises at least one of the authorized individual being further than a threshold distance from the connection port, and an amount of time the connection port has been disconnected from an authorized device exceeds a threshold time.

In an example of this monitoring device, the processor determines whether the authorized individual is within the threshold distance comprises at least one of determining a location of the authorized individual by determining a position of a communication device associated with the authorized individual, and determining if a communication device associated with the authorized individual is detectable by another communication device near the connection port.

In an example of this monitoring device, the communication device comprises a mobile station and the controller causes a message to be sent to the mobile station indicating that the connection port is not connected.

In an example of this monitoring device, the mobile station responds to the message by generating an alert that is at least one of audible, tactile and visual.

In an example of this monitoring device, the processor is configured to determine whether the authorized individual has provided an acceptable response to the notice, determine whether a connection restoration time has passed since providing the notice to the authorized individual, and cause a second notice to be provided to at least the authorized individual indicating that the connection port is not connected when the connection port remains not connected, the authorized individual has not provided the acceptable response to the notice, and the restoration time has passed.

In an example of this monitoring device, the processor is configured to determine the connection restoration time based on a distance between the connection port and the authorized individual when the notice was provided, and the acceptable response comprises at least one of an indication of a reason that the connection port remains not connected or an indication that the authorized individual will connect the connection port to the at least one authorized device at a later time.

In an example of this monitoring device, the processor is configured to determine a service time between an arrival time when the authorized individual arrives at the location of the connection port and a departure time when the authorized individual departs from the location of the connection port, and determine an amount of time that the connection port is connected to a service tool within the determined service time.

In an example of this monitoring device, the processor is configured to determine whether the authorized individual connected and disconnected one or more devices and the connection port during the determined service time.

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates a system for remotely monitoring selected aspects of a passenger carrying system.
Figure 2 is a flowchart diagram illustrating an example method of remotely maintaining the connection status of a connection port of a passenger carrying system.

### DETAILED DESCRIPTION

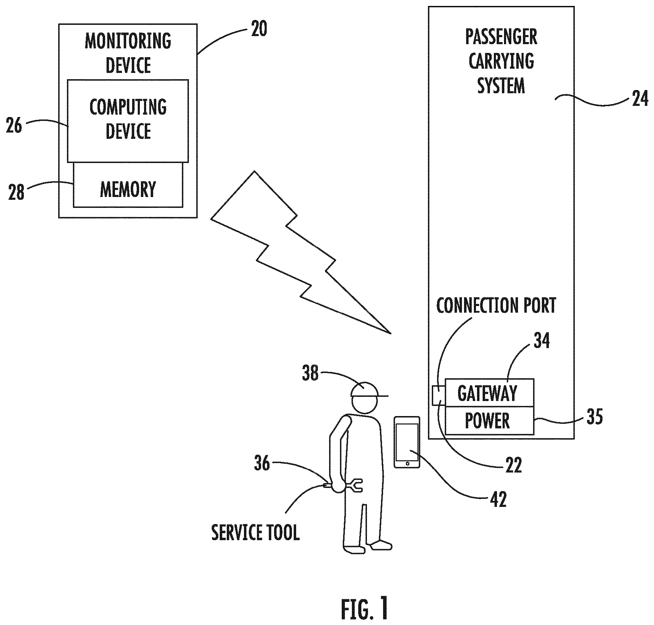

Figure 1 schematically shows a monitoring device 20 that remotely monitors a status of a connection port (i.e. a service tool port) 22 of a passenger carrying system 24. In some examples, the passenger carrying system is an elevator system. In other instances, the passenger carrying system 24 is an escalator or moving walkway.

The monitoring device 20 includes at least one computing device 26 and memory 28. The computing device 26 includes at least one processor and may be realized utilizing cloud computing resources, for example. The memory 28 in this example includes information regarding a plurality of passenger carrying systems 24 and their associated connection ports 22, which are all located remotely from the monitoring device 20. In some embodiments, information regarding different systems 24 is available to the computing device 26 from an outside or remote database. The memory 28, in some embodiments, also includes processor-executable instructions that cause the computing device 26 to perform the functions described below for maintaining the status of connection ports 22 of a variety of passenger carrying systems 24.

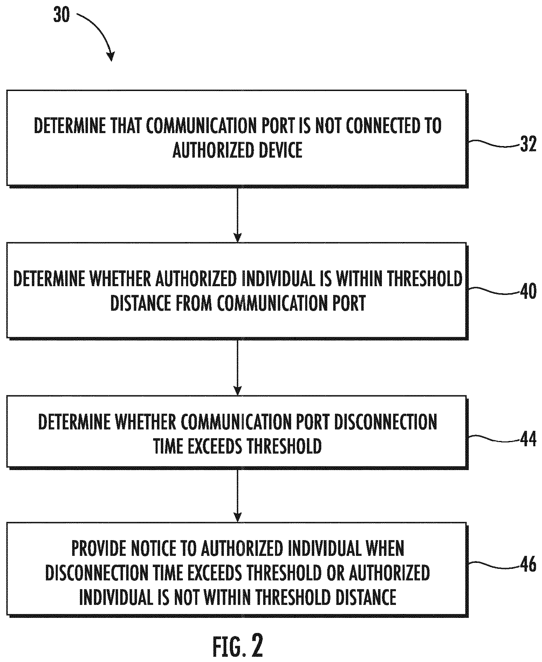

Figure 2 is a flowchart diagram 30 that summarizes an example approach for remotely maintaining the connection status of the connection port 22. With this approach, an individual can be notified that the connection port 22 may have been incorrectly or inadvertently left disconnected because at least one criterion is satisfied.

At 32, the monitoring device 20 monitors the connection status of the connection port 22 and determines that the connection port 22 is not currently connected to an authorized device. In this embodiment, the connection port 22 is capable of providing a status indication to the monitoring device 20 utilizing known line-based or wireless communication techniques. The status indication from the connection port 22 indicates whether the port is connected to an authorized device, i.e. a communication gateway 34 of the passenger carrying system 24. In some embodiments where the connection port 22 requires external power to generate a status message, the absence of a status message from the connection port 22 at an expected interval serves as an indication that the connection port 22 is not properly connected to the power source 35.

The connection port 22 is also configured to be selectively connected with a service tool 36 utilized by an authorized individual 38, such as a mechanic, technician, or inspector. When the authorized individual 38 desires to perform service on the passenger carrying system 24, for example, the service tool 36 may be connected to the connection port 22 to provide the individual 38 with information regarding the passenger carrying system 24. The service tool 36 may also be used to input data, system configuration information, or updates to software or firmware, for example, into appropriate portions of the passenger carrying system 24.

In order to connect the service tool 36 with the connection port 22, the individual 38 must disconnect that connection port 22 from other devices, such as the communication gateway 34.

At 40 in Figure 2, the monitoring device 20 determines whether the authorized individual 38 is within a threshold distance of the communication port 22. In some example embodiments, the threshold distance is within a predetermined range relative to the site of the system 24, which includes the location of the connection port 22. The way in which the monitoring device 20 makes this determination may vary depending on the embodiment.

For example, the monitoring device 20 may determine a current location of the individual 38. This determination may be based on receiving location information provided from another device or system. In the example of Figure 1, the individual 38 has a mobile station 42 that facilitates obtaining the location information. The mobile station 42 may be a smartphone or another type of device capable of remote communications over the Internet or another network. Some mobile stations include a global positioning system (GPS) receiver that provides location information, such as a longitude and latitude of the current location of the mobile station 42, which is presumed to be the location of the individual 38. Other possibilities include location identification based on cellular station signal triangulation location techniques.

In some embodiments, the monitoring device 20 does not require current location information but, instead, uses a lack or absence of a short-range communication link (e.g., Wi-Fi or Bluetooth) with the mobile station 42 as an indication that the individual 38 is not within the desired range of the connection port 22. If the individual 38 is at the site of the system 24 and there is a local wireless communication network or beacon signaling device at that site, the mobile station 42 should establish a connection or be detectable while the individual 38 is at the site. When such a connection is missing or the mobile station 42 is otherwise not detectable, the monitoring device 20 determines that the individual 38 is not within a threshold distance of the communication port 22.

When the monitoring device 20 determines that the connection port 22 is not connected to an authorized device, and an authorized individual is at the location or site of the passenger carrying system 24, the monitoring device 20 assumes that the individual 38 has the connection port 22 disconnected from other devices for a legitimate reason.

The illustrated example embodiment also includes determining how long the connection port 22 has been disconnected. At 44, the monitoring device 20 determines whether the disconnection time exceeds a preselected threshold time.

In the illustrated example embodiment, the threshold distance and the threshold time are criteria used by the monitoring device 20 to determine whether the connection status of the connection port 22 requires attention or correction. At 46, the monitoring device 20 causes a notice to be provided to the individual 38 that the connection port 22 is not connected to at least one authorized device if at least one of the criteria is satisfied. According to the example of Figure 2, the notice is provided to the authorized individual 38 when the connection port 22 is not connected to at least one authorized device for a time that exceeds the threshold time or the authorized individual 38 is beyond the threshold distance from the connection port 22. Providing such notice assists the individual 38 in recognizing the need to connect the connection port 22 to the gateway 34, the power source 35, or both so that ongoing, remote monitoring of the passenger carrying system 24 may continue. Without a proper connection between the connection port 22 and the gateway 34, such remote monitoring is not possible in the illustrated example.

The mobile station 42 provides an alert in response to the notice, which comprises a message from the monitoring device 20, regarding the disconnected status of the connection port 22. The alert may be an audible, tactile or visual indication on the mobile station 42. An additional alert may be provided to other personnel, which may be at the location of the monitoring device 20 for example.

In some embodiments, the individual 38 has the option of responding to the notice provided on the mobile station 42. Acceptable responses include an indication that the connection port 22 was left disconnected for a legitimate reason. For example, the associated passenger carrying system 24 may be left powered down for additional maintenance reasons. Another example acceptable response is that the individual 38 will reestablish the appropriate connection for the connection port 22 at a later time.

The monitoring device 20 takes into account whether an appropriate response to the notice has been received. If no response has been provided and a connection restoration time has passed since the notice was provided regarding the disconnected connection port 22, the monitoring device 20 provides a second notice to at least the same authorized individual 38 and possibly to other authorized individuals within a reasonable distance from the passenger carrying system 24. In some examples, the processor of the computing device 26 determines a connection restoration time based on the distance between the connection port 22 and the authorized individual when the notice was provided. For example, if the individual has traveled a significant distance from the site of the passenger carrying system 24, it will take longer for that individual to return to restore an appropriate connection for the connection port 22. The monitoring device 20, in this example, takes such information into account when determining whether an appropriate amount of time has passed to warrant providing a second notice.

Another feature of the illustrated example embodiment is that the monitoring device 20 determines a service time between an arrival time when the individual 38 arrives at the location of the passenger carrying system 24 and a departure time when that individual 38 leaves that location. The monitoring device 20 also determines an amount of time that the connection port 22 is connected to the service tool 36 within that service time. This allows the monitoring device 20 to provide reporting information regarding the amount of time the individual 38 spends at the worksite and the amount of time that same individual utilizes a service tool 36 to perform one or more procedures during that service time.

The monitoring device 20 is also capable of determining a series of connections between the connection port 22 and one or more devices while the individual 38 is at that site. For example, when a specific sequence or timing of connections is required to properly perform an inspection or maintenance procedure, the monitoring device 20 may gather information regarding whether the individual 38 is properly performing that procedure.

Embodiments of monitoring devices like that described above enhance productivity of service individuals by providing an alert or notice that a connection port has to be reconnected before that individual travels very far from the site of that connection port. Additionally, more reliable or continuous connection between the connection port 22 and the gateway 34 will be maintained yielding an increased amount of information available for ongoing monitoring of the passenger carrying system 24.

The preceding description is exemplary rather than limiting in nature. Variations and modifications to the disclosed examples may become apparent to those skilled in the art that do not necessarily depart from the claimed invention. The scope of legal protection given to this invention can only be determined by studying the following claims.

## Claims

1. A method (30) remotely maintaining a connection status of a service tool port (22) of a passenger carrying system (24), wherein the passenger carrying system (24) is an elevator, an escalator or a moving walkway; the method comprising:
determining the connection status of the service tool port (22) by determining whether the service tool port (22) is connected to at least one of a service tool (36) or a communication gateway device (34), wherein an authorized individual (38) must disconnect the service tool port (22) from the communication gateway device (34) of the passenger carrying system (24) in order to connect the service tool (36) with the service tool port (22);
determining that the service tool port (22) is not connected to the communication gateway device (34);
determining whether at least one criterion is satisfied while the service tool port (22) is not connected to the communication gateway device (34); and
providing a notice to the authorized individual (38) when the at least one criterion is satisfied and the service tool port (22) is not connected to the communication gateway device (34).

2. The method (30) as claimed in claim 1, wherein the at least one criterion comprises at least one of
the authorized individual (38) being further than a threshold distance from the service tool port (22) (40), and
an amount of time the service tool port (22) has been disconnected from the communication gateway device (34) exceeds a threshold time (44).

3. The method (30) of claim 2, wherein determining whether the authorized individual (38) is within the threshold distance (40) comprises at least one of
determining a location of the authorized individual (38) by determining a position of a communication device associated with the authorized individual (38), and
determining if a communication device associated with the authorized individual (38) is detectable by another communication device near the service tool port (22).

4. The method (30) of claim 3, wherein
the communication device comprises a mobile station (42); and
providing the notice (46) comprises sending a message to the mobile station (42) indicating that the service tool port (22) is not connected to the communication gateway device (34).

5. The method (30) of claim 4, wherein the mobile station (42) responds to the message by generating an alert that is at least one of audible, tactile and visual.

6. The method (30) as claimed in any one of the preceding claims, comprising
determining whether the authorized individual (38) has provided an acceptable response to the notice;
determining whether a connection restoration time has passed since providing the notice to the authorized individual (38); and
providing a second notice to at least the authorized individual indicating that the service tool port (22) is not connected when the service tool port (22) remains not connected, the authorized individual (38) has not responded to the notice, and the restoration time has passed.

7. The method (30) of claim 6, comprising determining the connection restoration time based on a distance between the service tool port (22) and the authorized individual (38) when the notice was provided, and
wherein the acceptable response comprises at least one of an indication of a reason that the service tool port (22) remains not connected or an indication that the authorized individual (38) will connect the service tool port (22) to the at least one communication gateway device (34) at a later time.

8. The method (30) as claimed in any one of the preceding claims, comprising
determining a service time between an arrival time when the authorized individual (38) arrives at the location of the service tool port (22) and a departure time when the authorized individual (38) departs from the location of the service tool port (22); and
determining an amount of time that the service tool port (22) is connected to a service tool (36) within the determined service time.

9. The method (30) of claim 8, comprising determining whether the authorized individual (38) connected and disconnected one or more devices (34, 35, 36) and the service tool port (22) during the determined service time.

## Patentansprüche

1. Verfahren (30) zur Fernwartung eines Verbindungsstatus eines Servicewerkzeugports (22) eines Personenbeförderungssystems (24), wobei das Personenbeförderungssystem (24) ein Aufzug, eine Rolltreppe oder ein Fahrsteig ist; wobei das Verfahren Folgendes umfasst:
Bestimmen des Verbindungsstatus des Servicewerkzeugports (22) durch Bestimmen, ob der Servicewerkzeugport (22) mit mindestens einem von einem Servicewerkzeug (36) oder einer Kommunikations-Gateway-Vorrichtung (34) verbunden ist, wobei eine autorisierte Person (38) den Servicewerkzeugport (22) von der Kommunikations-Gateway-Vorrichtung (34) des Personenbeförderungssystems (24) trennen muss, um das Servicewerkzeug (36) mit dem Servicewerkzeugport (22) zu verbinden;
Bestimmen, dass der Servicewerkzeugport (22) nicht mit der Kommunikations-Gateway-Vorrichtung (34) verbunden ist;
Bestimmen, ob mindestens ein Kriterium erfüllt ist, während der Servicewerkzeugport (22) nicht mit der Kommunikations-Gateway-Vorrichtung (34) verbunden ist; und
Bereitstellen eines Hinweises an die autorisierte Person (38), wenn das mindestens eine Kriterium erfüllt ist und der Servicewerkzeugport (22) nicht mit der Kommunikations-Gateway-Vorrichtung (34) verbunden ist.

2. Verfahren (30) nach Anspruch 1, wobei das mindestens eine Kriterium mindestens eines von Folgenden umfasst
die autorisierte Person (38) ist weiter als einer Schwellenentfernung von dem Servicewerkzeugport (22) entfernt (40) und
eine Zeitdauer, die der Servicewerkzeugport (22) von der Kommunikations-Gateway-Vorrichtung (34) getrennt war, überschreitet eine Schwellenzeit (44).

3. Verfahren (30) nach Anspruch 2, wobei das Bestimmen (40), ob sich die autorisierte Person (38) innerhalb der Schwellenentfernung befindet, mindestens eines von Folgenden umfasst
Bestimmen eines Standorts der autorisierten Person (38) durch Bestimmen einer Position einer der autorisierten Person (38) zugeordneten Kommunikationsvorrichtung und
Bestimmen, ob eine der autorisierten Person (38) zugeordnete Kommunikationsvorrichtung durch eine andere Kommunikationsvorrichtung in der Nähe des Servicewerkzeugports (22) detektierbar ist.

4. Verfahren (30) nach Anspruch 3, wobei
die Kommunikationsvorrichtung eine Mobilstation (42) umfasst; und
das Bereitstellen des Hinweises (46) Senden einer Nachricht an die Mobilstation (42) umfasst, die angibt, dass der Servicewerkzeugport (22) nicht mit der Kommunikations-Gateway-Vorrichtung (34) verbunden ist.

5. Verfahren (30) nach Anspruch 4, wobei die Mobilstation (42) auf die Nachricht durch Generieren eines Alarms reagiert, der mindestens eines von akustisch, taktil und visuell ist.

6. Verfahren (30) nach einem der vorhergehenden Ansprüche, umfassend
Bestimmen, ob die autorisierte Person (38) eine zulässige Reaktion auf den Hinweis bereitgestellt hat;
Bestimmen, ob seit dem Bereitstellen des Hinweises an die berechtigte Person (38) eine Wiederherstellungszeit der Verbindung verstrichen ist; und
Bereitstellen eines zweiten Hinweises an mindestens die autorisierte Person, die angibt, dass der Servicewerkzeugport (22) nicht verbunden ist, wenn der Servicewerkzeugport (22) weiterhin nicht verbunden ist, die autorisierte Person (38) nicht auf den Hinweis reagiert hat und die Wiederherstellungszeit verstrichen ist.

7. Verfahren (30) nach Anspruch 6, umfassend Bestimmen der Wiederherstellungszeit der Verbindung auf Grundlage einer Entfernung zwischen dem Servicewerkzeugport (22) und der autorisierten Person (38), als der Hinweis bereitgestellt wurde, und
wobei die zulässige Reaktion mindestens eines von einer Angabe eines Grundes dafür, dass der Servicewerkzeugport (22) weiterhin nicht verbunden ist, oder einer Angabe, dass die autorisierte Person (38) den Servicewerkzeugport (22) zu einem späteren Zeitpunkt mit der mindestens einen Kommunikations-Gateway-Vorrichtung (34) verbinden wird, umfasst.

8. Verfahren (30) nach einem der vorhergehenden Ansprüche, umfassend
Bestimmen einer Servicezeit zwischen einer Ankunftszeit, zu der die autorisierte Person (38) an dem Standort des Servicewerkzeugports (22) ankommt, und einer Aufbruchszeit, zu der die autorisierte Person (38) den Standort des Servicewerkzeugports (22) verlässt; und
Bestimmen einer Zeitdauer, in welcher der Servicewerkzeugport (22) innerhalb der bestimmten Servicezeit mit einem Servicewerkzeug (36) verbunden ist.

9. Verfahren (30) nach Anspruch 8, umfassend Bestimmen, ob die autorisierte Person (38) während der bestimmten Servicezeit eine oder mehrere Vorrichtungen (34, 35, 36) und den Servicewerkzeugport (22) verbunden und getrennt hat.

## Revendications

1. Procédé (30) de maintien à distance d'un état de connexion d'un port d'outil de service (22) d'un système de transport de passagers (24), ledit système de transport de passagers (24) étant un ascenseur, un escalier mécanique ou un trottoir roulant ; le procédé comprenant :
la détermination de l'état de connexion du port d'outil de service (22) en déterminant si le port d'outil de service (22) est connecté à au moins l'un d'un outil de service (36) ou d'un dispositif de passerelle de communication (34), dans lequel une personne autorisée (38) doit déconnecter le port d'outil de service (22) du dispositif de passerelle de communication (34) du système de transport de passagers (24) afin de connecter l'outil de service (36) au port d'outil de service (22) ;
la détermination que le port d'outil de service (22) n'est pas connecté au dispositif de passerelle de communication (34) ;
la détermination établissant si au moins un critère est satisfait tandis que le port d'outil de service (22) n'est pas connecté au dispositif de passerelle de communication (34) ; et
la fourniture d'une notification à la personne autorisée (38) lorsque l'au moins un critère est satisfait et que le port d'outil de service (22) n'est pas connecté au dispositif de passerelle de communication (34).

2. Procédé (30) selon la revendication 1, dans lequel l'au moins un critère comprend au moins l'un de
la personne autorisée (38) se trouvant à une distance supérieure à une distance seuil par rapport au port d'outil de service (22) (40), et
un laps de temps pendant lequel le port d'outil de service (22) a été déconnecté du dispositif de passerelle de communication (34) dépasse un temps seuil (44).

3. Procédé (30) selon la revendication 2, dans lequel la détermination de la présence de la personne autorisée (38) à une distance inférieure à la distance seuil (40) comprend au moins l'un de
déterminer un emplacement de la personne autorisée (38) en déterminant une position d'un dispositif de communication associé à la personne autorisée (38), et
déterminer si un dispositif de communication associé à la personne autorisée (38) est détectable par un autre dispositif de communication près du port d'outil de service (22).

4. Procédé (30) selon la revendication 3, dans lequel
le dispositif de communication comprend une station mobile (42) ; et
la fourniture de la notification (46) comprend l'envoi d'un message à la station mobile (42) indiquant que le port d'outil de service (22) n'est pas connecté au dispositif de passerelle de communication (34).

5. Procédé (30) selon la revendication 4, dans lequel la station mobile (42) répond au message en générant une alerte qui est au moins l'un de audible, tactile et visuelle.

6. Procédé (30) selon l'une quelconque des revendications précédentes, comprenant
la détermination établissant si la personne autorisée (38) a fourni une réponse acceptable à la notification ;
la détermination établissant si un temps de rétablissement de la connexion s'est écoulé depuis la fourniture de la notification à la personne autorisée (38) ; et
la fourniture d'une seconde notification à au moins la personne autorisée indiquant que le port d'outil de service (22) n'est pas connecté lorsque le port d'outil de service (22) reste non connecté, la personne autorisée (38) n'a pas répondu à la notification et le temps de rétablissement est écoulé.

7. Procédé (30) selon la revendication 6, comprenant la détermination du temps de rétablissement de connexion en fonction d'une distance entre le port d'outil de service (22) et la personne autorisée (38) lorsque la notification a été fournie, et
dans lequel la réponse acceptable comprend au moins l'une d'une indication d'une raison pour laquelle le port d'outil de service (22) reste non connecté ou une indication que la personne autorisée (38) connectera le port d'outil de service (22) à l'au moins un dispositif de passerelle de communication (34) à un temps ultérieur.

8. Procédé (30) selon l'une quelconque des revendications précédentes, comprenant
la détermination d'un temps de service entre un temps d'arrivée lorsque la personne autorisée (38) arrive au niveau de l'emplacement du port d'outil de service (22) et un temps de départ lorsque la personne autorisée (38) part de l'emplacement du port d'outil de service (22) ; et
la détermination d'un laps de temps pendant lequel le port d'outil de service (22) est connecté à un outil de service (36) au sein du temps de service déterminé.

9. Procédé (30) de la revendication 8, comprenant la détermination établissant si la personne autorisée (38) a connecté et déconnecté un ou plusieurs dispositifs (34, 35, 36) et le port d'outil de service (22) pendant le temps de service déterminé.
